# EUROPEAN PATENT APPLICATION

(11) **EP 2 687 872 A1**
(43) Date of publication of application: **22.01.2014**
(21) Application number: 12177145.5
(22) Date of filing: 19.07.2012
(51) Int. Cl.: G01V 1/20, B63B 59/04, C09D 5/16

(54) **Systems and methods for marine anti-fouling**

(71) Applicant: Geco Technology B.V., 2586 BJ S'Gravenhage (NL)
(72) Inventor: Hartshorne, Seth, Burwell, Cambridgeshire CB25 0EG (GB); Tustin, Gary, Sawston, Cambridgeshire CB22 3DQ (GB)
(74) Representative: Fortt, Simon Merton

(57) **Abstract**

An anti-biofouling casing for a seismic streamer is described, the anti-biofouling casing including a polymer system having a hydrophobically-modified base polymer, the hydrophobically-modified base polymer including a base polymer having a backbone and a hydrophobically derivatized chain extender coupled to the backbone of the base polymer. The polymer system including between about 0.1% and 10% of the hydrophobically derivatized chain extender by weight. The anti-fouling casing including a hydrophobic surface that serves to prevent biofouling of the surface.

## Description

### BACKGROUND

The field of the invention is that of providing for the reduction of biofouling of marine equipment. In particular, methods and systems are provided for preventing biofouling of marine seismic streamers. The invention in particular relates to analysis via seismic methods but can also be applied to any field implementing seismic data acquisition in a marine environment.

During marine seismic acquisition operations, networks of sensors - most typically hydrophones, geophones, or accelerometers - are deployed at or beneath a surface of a body of water. For example, hydrophones are distributed along tubular cables to form linear acoustic antennas, commonly known as 'seismic streamers'. In general, a network of these seismic streamers, known as a seismic array, is towed by a marine vessel. Seismic arrays can comprise of up to ten or more individual streamer cables, each of which streamer cables may be up to 10 km in length.

Seismic exploration campaigns can be scheduled to last several months and often one vessel may spend a period of activity in one geographical location then move to a new location to begin a further period of seismic data acquisition. Given the length of the streamer networks it is avoided, as much as possible, to return (by reeling) the streamers back onto the vessel, as the process is operationally difficult and time consuming. This results in the streamer arrays spending consecutive months, often 6-12 months, immersed in water. Moreover, the streamers are towed at a depth of approximately 5 meters below the surface of the water and are towed at a speed that rarely exceeds 5 km/h. Seismic streamers are thus prone to fouling by marine organisms such as 'slime' and barnacles.

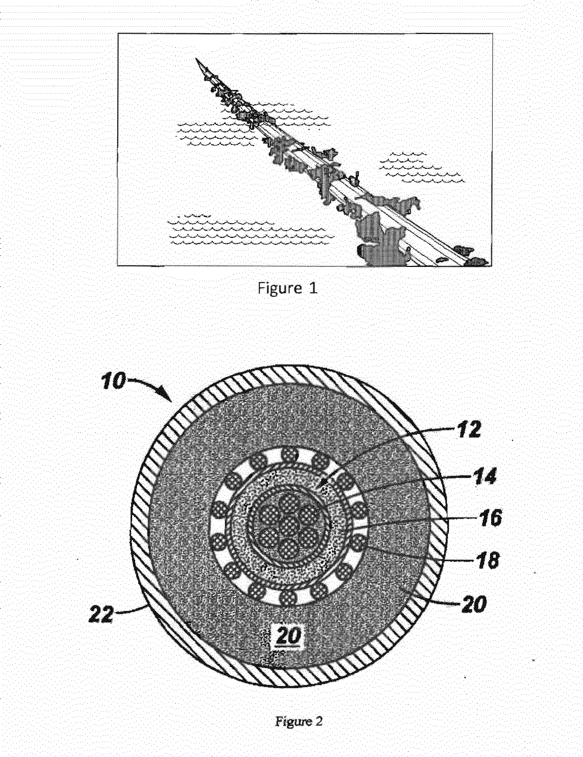

Figure 1 illustrates a seismic streamer fouled by barnacles following a period of deployment in the Gulf of Mexico.

Fouling of seismic streamers can generate several problems:
1. The drag of seismic streamers is increased which consequently results in increased fuel consumption.
2. The induced increase in mass on the streamer can cause direct and indirect damage due to increased strain on stress members.
3. Hydrodynamic flow noise is created by the biofouling that in severe cases may reduce the acoustic signal-to-noise performance of the acquisition system.
4. Personnel are put at risk as work boats need to be deployed in order to perform manual removal of the fouling organisms using scraping devices. The process is highly time consuming and results in economically costly lost-production time. Moreover due to the sharp nature of the hand-held devices used to physically remove fouling organisms, the process is often coupled with damage to the integrity of the seismic streamer tubing.

A typical seismic streamer comprises sensors, strength members and cabling housed all disposed within a polyurethane casing. The casing may be manufactured from an extruded layer of flexible polyurethane tubing or the like that functions to protect the components of the streamer from the marine environment. It is the-outer surface of this casing that provides a surface suitable for biofouling, such as barnacle colonization or the like. Although casing materials, such as polyurethane, are typically difficult to chemically or biologically adhere to, biofouling, by barnacles in particular, is problematic in the marine seismic industry.

There are several steps that culminate in the barnacle colonization process. Once the streamer surface is immersed in water it is immediately covered with a thin 'conditioning' film consisting mainly of proteins and other dissolved organic molecules. This step is followed by the adhesion of single floating bacteria. Once attached bacteria begin to generate extra-polysaccharide ("EPS") layers that result in inter-bacterial network formation and enhanced adhesion to the immersed surface of the seismic streamer. This process is generally termed micro-fouling and results in biofilm formation on the streamer. The micro-fouling process is believed to strongly contribute to a pursuant rapid colonization by macro-foulers (e.g. barnacles) as the biomass-rich biofilm provides a readily-available food source.

Antifouling paints have long been the most effective method to prevent macrofouling of steel-hulled marine vessels. In such paints, biocides or heavy metal compounds, such as tributyltin oxide ("TBTO"), are released (leached) from the paint to inhibit microorganism attachment. Typically these paints are composed of an acrylic polymer with tributyltin groups attached to the polymer via an ester bond. The organotin moiety has biocidal properties and is acutely toxic to the attached organisms. TBT compounds are historically the most effective compounds for biofouling prevention, affording protection for up to several years.

Unfortunately, TBT compounds are also toxic for non-target marine organisms. Furthermore, TBT compounds are not biodegradable in water and, as a result, the compounds may accumulate in water and pose an environmental hazard. As a result, the International Maritime Organization ("IMO") banned the application of TBT compounds in 2003, and required the removal of all TBT coatings, worldwide by 2008. Alternative strategies have thus been sought that have much lower general toxicity and as such are more environmentally acceptable.

In the seismic industry, the systems and methods of preventing the biofouling of seismic streamers used to acquire seismic data comprise incorporating biocides in the streamer skin and applying paints or attaching coatings to the streamer skin; the skin of the seismic streamer is typically a polyurethane layer/envelope that surrounds the sensor system of the seismic streamer. As such, the generation of an antifouling strategy for seismic streamers has previously focused primarily on two different approaches.

The first general strategy for preventing fouling on seismic streamers is based on the incorporation of a biocidal compound within the polyurethane skin. A wide array of chemicals are known to be anti-microbial by nature. These anti-microbial chemicals include various polymers - e.g. polyethylene oxide, polyacrylamide - quaternary ammonium salts - *e.g.* benzylalkonium chloride - and organic compounds - such as Diuron. With regard to seismic streamers, compounds have been incorporated into the polyurethane tubing that are biologically active against organisms that settle on the surface of the tubing and, therefore the chemicals act as a post-settlement strategy. One issue with the antifouling approach of using biocides is that while the biocide kills organisms on the surface of the streamer, the organism is not removed. As such, the biofouled surface remains on the streamer and may act as a colonization initiation point for continued fouling.

The second approach involves applying a silicone-based coating to the skin of the streamer, which coating acts to prevent the initial adhesion, or aids with the removal of macrofouling organisms by generation of a hydrophobic/high contact angle streamer surface. Silicones have unique properties that make them useful as antifouling coatings.

The typical skin of a seismic streamer comprises polyurethane, which is a substrate on which it is difficult to chemically and or physically adhere the hydrophobic/high contact angle antifouling coatings of the prior art. A method of overcoming the issues of chemical adhesion of silicon polymers to polyurethane as well as the resulting break-down/destruction of the polymer coating with ageing is based on the application of an intermediate layer (tie-coat) to the polyurethane followed by application of a silicone-elastomer coating that is adhered to the intermediate tie-coat layer via a heat-curing process. However, in field experiments, although the silicone-outer layer applied to the skin of the streamer in this way was demonstrated to prevent barnacle-fouling in the short term, after a certain period of time, de-lamination of the outer silicone elastomer coating was observed.

Moreover, in the field testing, de-lamination of the coating from the polyurethane tube was exacerbated during the operational process of reeling streamers onto and off marine vessels before and after seismic shooting. The propensity of silicone coatings to delaminate from the polyurethane streamer skin is an intrinsic property due to the intrinsically low resistance of the coatings to abrasion. Notably, in areas in which delamination was most evident, rapid barnacle-colonization of the streamer surface was observed. In fact, the prior art method of laminate silicon polymer coatings may, in the long run, actually increase biofouling.

As discussed above, the previous methods of addressing biofouling of seismic streamers have been to apply coatings or paints to the streamer skin. The application of coatings and paints to the streamer have been pursued as the paints and coatings can be applied directly to a formed streamer casing/skin and, as such, there is no issue about, among other things, of the coating and/or paint interacting with the constituents of the streamer skin, adversely affecting the fabrication of the streamer skin, degrading the durability/effectiveness of the streamer skin and/or interacting with the internal elements of the seismic streamer; for example, many seismic streamers comprise kerosene as a void filing material within the streamer, and the kerosene may adversely interact with the constituents of the coating or paint. As a solution to biofouling, the application of coatings and paints to the skin of the seismic streamer has not been effective because of the break down/disintegration/delamination of such coatings and paints under field conditions.

### BRIEF SUMMARY

In an embodiment of the present invention, an anti-biofouling casing for a seismic streamer is provided. The anti-biofouling casing may include a polymer system comprising a hydrophobically-modified base polymer. The hydrophobically-modified base polymer may include a base polymer having a backbone and a hydrophobically derivatized chain extender coupled to the backbone of the base polymer. The polymer system may comprise between about 0.1% and 10% of the hydrophobically derivatized chain extender by weight. The hydrophobically-modified base polymer may be produced by reacting a pre-polymer with the hydrophobically derivatized chain extender. In some embodiments, a portion of the outer surface of the casing may be removed.

The hydrophobically derivatized chain extender may include a hydrophobic moiety, which hydrophobic moiety may include a fluorine derivative, a silicon derivative, and/or a polyethylene glycol derivative. In one embodiment, the polymer system may include between about 0.5% and 4% of the hydrophobically derivatized chain extender by weight. In another embodiment, the polymer system may include between about 0.5% and 2% of the hydrophobically derivatized chain extender by weight. The base polymer may include a polyurethane, thermoplastic polyurethane, urethane, polyvinylchloride, polyethylene, and the like.

The anti-biofouling casing may also include a hydrophobic polymer filler. The hydrophobic polymer filler may be homogeneously dispersed throughout the anti-biofouling casing. The anti-biofouling casing may further include a streamer body including one or more sensors, a strength member, and a filler material where the anti-biofouling casing covers an exterior of the streamer body. The anti-biofouling casing may additionally include one or more members extending from the casing, the one or more members including the hydrophobically-modified base polymer. The one or more members may be composed of the hydrophobically-modified base polymer or include a skin encasing the one or more members, the skin including the hydrophobically-modified base polymer. In some embodiments, the casing may be transparent so that at least a portion of the interior of the casing is visible.

In another embodiment of the present invention, an anti-biofouling casing for a seismic streamer is provided. The anti-biofouling casing may include a polymer system comprising: a base polymer and a hydrophobic polymer filler. The polymer system may include between about 0.1% and 10% of the hydrophobic polymer filler by weight. In another embodiment, the polymer system may include between about 0.5% and 4% of the hydrophobic polymer filler by weight. In yet another embodiment, the polymer system may include between about 0.5% and 2% of the hydrophobic polymer filler by weight.

In another embodiment of the present invention, a method of manufacturing an anti-biofouling casing for a seismic streamer is provided. The method may include providing a polymer system or casing comprising a hydrophobically-modified base polymer. The hydrophobically-modified base polymer may include: a base polymer having a backbone and a hydrophobically derivatized chain extender coupled to the backbone of the base polymer. The polymer system or casing may include between about 0.1% and 10% of the hydrophobically derivatized chain extender by weight. The method may also include removing the outer surface of at least a portion of the casing. In another embodiment, the polymer system may include between about 0.5% and 4% of the hydrophobic polymer filler by weight. In yet another embodiment, the polymer system may include between about 0.5% and 2% of the hydrophobic polymer filler by weight.

In one embodiment, the outer surface removed is between about 10 and about 40 microns. In another embodiment, the outer surface removed is between about 20 and about 30 microns. The outer surface may be removed while the casing is in a molten or softened state. In one embodiment, the outer surface of the casing is removed around the entire periphery of the casing, while in another embodiment, the outer surface of the casing is removed around a portion of the casing's periphery.

The method may further include extruding the casing onto the seismic streamer prior to removing the outer surface of the casing. Alternatively, the method may additionally include extruding the casing as a tube and inserting the seismic streamer into the extruded tube prior to removing the outer surface of the casing.

In another embodiment of the present invention, a method of manufacturing an anti-fouling seismic streamer is provided. The method may include extruding a polymer system onto a seismic streamer body where the polymer system includes a hydrophobically-modified base polymer including a base polymer with a hydrophobically derivatized chain extender coupled to the backbone of the base polymer. The polymer system may include between about 0.1 % and 10% of the hydrophobically derivatized chain extender by weight.

The step of extruding the polymer system onto the seismic streamer body may include extruding the polymer system into a tube and inserting the seismic streamer body into the extruded tube. The hydrophobically derivatized chain extender may include a fluorine derivatized chain extender, a silicone derivatized chain extender, and/or a glycol derivatized chain extender.

The method may also include reacting a polyol with diisocyanate to form a diisocyanate terminated intermediate oligomer and reacting the intermediate oligomer with a chain extender comprising a hydrophobic moiety. The chain extender may include a low molecular weight diol and/or low molecular weight diamine. The method may further include removing between about 10 and about 40 microns, or between about 20 and 30 microns, of an outer surface of at least a portion of the polymer system.

### BRIEF DESCRIPTION OF THE DRAWINGS

In the figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

The present invention will become more fully understood from the detailed description and the accompanying drawings, wherein:

Figure 1 is an illustration depicting biofouling of a marine seismic streamer;

Figure 2 illustrates a cross-section of a marine seismic streamer;

Figure 3A illustrates contact angles for effective aqueous glue attachment of an organism to a polyurethane surface;

Figure 3B illustrates a contact angle on a polyurethane surface;

Figure 3C illustrates contact angles for ineffective aqueous glue attachment of an organism to a silicon coated polyurethane surface;

Figure 4A illustrates a thermo-polyurethane ("TPU") block copolymer;

Figure 4B illustrates a TPU block copolymer with a hydrophobically derivatized chain extender, in accordance with an embodiment of the present invention;

Figure 4C illustrates a streamer skin comprising a TPU bock copolymer in accordance with an embodiment of the present invention;

Figure 5 illustrates a method of fabricating a seismic streamer skin with a hydrophobically modified surface;

Figure 6 illustrates a chart showing biological adhesion values of marine organisms versus a surface energy;

Figure 7A illustrates a streamer skin in accordance with an embodiment of the present invention;

Figure 7B illustrates another streamer skin having members extending from the streamer in accordance with an embodiment of the present invention;

Figure 8 illustrates a method of manufacturing an anti-fouling seismic streamer in accordance with an embodiment of the present invention; and

Figures 9A & B illustrate methods of manufacturing an anti-biofouling casing for a seismic streamer in accordance with an embodiment of the present invention.

### DETAILED DESCRIPTION

The ensuing description provides preferred exemplary embodiment(s) only, and is not intended to limit the scope, applicability or configuration of the invention. Rather, the ensuing description of the preferred exemplary embodiment(s) will provide those skilled in the art with an enabling description for implementing a preferred exemplary embodiment of the invention. It being understood that various changes may be made in the function and arrangement of elements without departing from the scope of the invention as set forth in the appended claims.

Embodiments of the invention aim, among other things, to overcome the disadvantages of existing seismic streamer casings. More precisely the invention is a streamer skin (or a streamer tubing) that can resist adhesion of marine organisms such as, but not limited to, biofouling by among other things marine slime, barnacles and/or the like. In an embodiment of the present invention, the antifouling aspect of the invention is integrated within the seismic streamer casing/tubing during the casing/tubing manufacturing process. Embodiments of the present invention circumvent issues of having to apply a paint or a coating to the casing/tubing post-manufacture of the casing/tubing in order to provide the casing/tubing with anti-biofouling properties. The post-manufacture application of paints or coatings to the casing/tubing provide for poor adhesion of the paint/coating with the casing/tubing and/or premature removal of the paint/coating from the surface of the tubing/casing during exposure or use. Furthermore, embodiments of the present invention provide that antifouling chemistry is 'locked into' the streamer tubing and therefore antifouling properties are resilient and may even be retained for the duration of the streamer's operational life. Therefore, some embodiments of the present invention provide a formulation for a seismic streamer skin material offering inherent antifouling properties.

Some embodiments of the present invention provide a skin that can be used to contain the acoustic equipment of a towed sonar line array and retain the mechanical and physical constraints linked with the streamer tubing inventory that is currently in operation.

Figure 2 illustrates a cross-section of a marine seismic streamer. The streamer 10 includes a central core 12 having a transmission bundle 14 surrounded by a strength member 16. The central core 12 is typically pre-fabricated before adding sensors and/or sensor electronics. Local wiring 18, which is used to connect the sensor and sensor electronics, is also disposed in the streamer 10 inside of a body 20 and a skin 22. In certain aspects, the body 20 may comprise a polymer body, a support structure and/or the like for holding the internal mechanisms of the streamer 10.

The body 20 may be filled with a liquid, gel, solid and/or the like to provide for communication of the internal mechanisms of the streamer 10 with the water surrounding the streamer. In general, seismic streamers have been filled with liquid kerosene to provide for communication of the internal mechanisms of the streamer 10 with the water surrounding the streamer. As such, the composition of the skin 22 has been an issue with respect to the constituents of the skin 22 since the kerosene may adversely interact with certain constituents of the skin 22.

The typical way to dispose the wiring 18 within the streamer cable 10 is to twist the wiring onto the central core 12 with a certain lay-length (or pitch) to allow for tensile cycling and bending of the streamer cable 10 without generating high stresses in the wires. Wiring layers in cables are often pre-made with the central core 12.

In some embodiments of the present invention, the streamer 10 may comprise a fluid streamer, comprising a fluid such as kerosene. In other embodiments of the present invention the streamer 10 may comprise a solid streamer with a solid/gel-type material disposed around the core of the streamer 10. Merely by way of example, for solid streamers it may be of importance to prevent biofouling so that the solid streamer may be maintained and for proper operation of the solid streamer. As such, by using an anti-biofouling system and method in accordance with an embodiment of the present invention, the operation of the solid streamer may be enhanced.

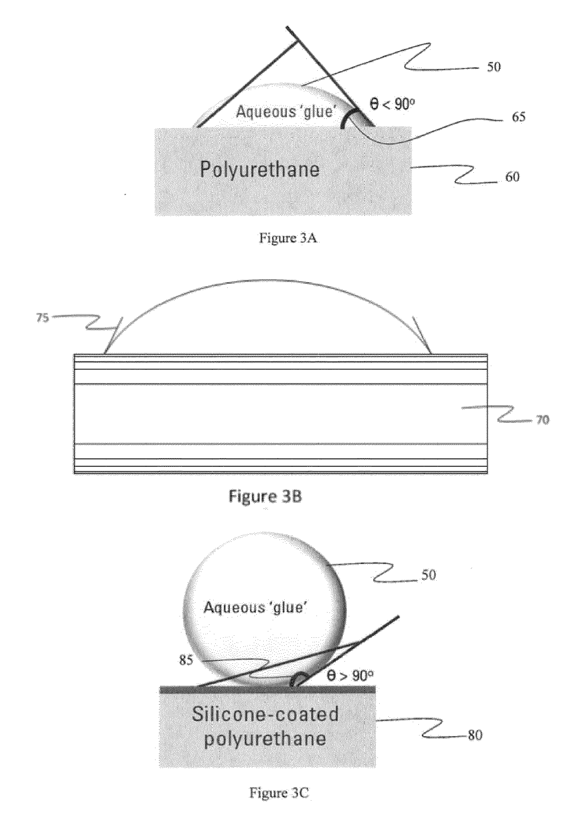

Figure 3A is a schematic representation of how a marine organism attaches to a surface. As depicted, a barnacle (not shown) uses an aqueous glue 50 to attach to a polyurethane surface 60. The aqueous glue 50 comprises an aqueous based mixture of proteins and polysaccharides excreted by the barnacle larvae to enable adhesion. Initial adhesion is promoted by provision of a hydrophilic surface such as a typical seismic streamer surface, wherein the hydrophilic surface provides a contact angle 60 that is less than 90 degrees.

Figure 3B illustrates a contact angle for an untreated polyurethane streamer casing. An untreated skin 70 of the seismic streamer in Figure 3 is relatively water wetting with a contact angle 75 of about 68.70°. As such, the untreated skin 70 is hydrophilic and prone to biofouling.

Figure 3C is a schematic representation of how an initial attachment of marine organisms to surfaces can be reduced via provision of hydrophobic surfaces (contact angle greater than 90 degree). As provided in Figure 3C, a treated surface 80 comprises polyurethane with a silicon coating. The silicon coating causes a contact angle 85 of the treated surface 80 to be greater than 90 degrees. As a result of the contact angle 85 being greater than 90 degrees a marine organism (not shown), in this example a barnacle larvae, cannot adhere to the a treated surface 80 using an aqueous glue 50 comprising an excreted aqueous based mixture of proteins and polysaccharides.

Changes to the contact angle of the skin of the seismic streamer may be produced by applying a coating. A large change in the contact angles was observed with the application of a silicone coating, such as an aminoalkyl functionalized polydimethylsiloxane. However, such a silicone coating is very difficult to apply to a streamer skin due to the contrast in the chemical nature of the coating and the polyurethane material of the seismic streamer skin. Furthermore, Applicants have observed that in brine at 40°C, an ageing process takes effect on the coated polyurethane streamer skin leading to the removal of the coating from the streamer surface. This removal of the coating due to ageing leaves areas of the original polyurethane exposed and at risk of biofouling.

As discussed above, because of the issues inherent to coating strategies, in particular poor adhesion and premature removal from the polyurethane surface during exposure or use, an alternative approach is required to generate, among other things, a durable antifouling technology that can prevent biofouling over an extended period of operation of a seismic streamer.

Seismic streamers are generally fabricated from TPU. TPU is formed by the reaction of: (1) diisocyanates with short-chain diols, referred to as chain extenders and (2) diisocyanates with long-chain bifunctional diols (known as polyols). The virtually unlimited amount of possible combinations for varying the structure and/or molecular weight of the three reaction compounds make it possible to fabricate an enormous variety of different TPUs.

TPU resin consists of linear polymeric chains in block-structures, where the linear chains contain low polarity segments, called soft segments, and are alternated in the resin with shorter, high polarity segments called hard segments. Both types of segments are linked together/coupled by covalent links/bonds to form block-copolymers.

The polarity of the hard segments creates a strong attraction between the hard segments, which causes a high degree of aggregation and order in the hard segment phase of the TPU. As such, the hard segment phase forms crystalline or pseudo crystalline areas that are disposed in a soft and flexible matrix. The crystalline or pseudo crystalline areas of the hard phase of the block copolymer act as physical crosslinks providing for the high elasticity level of TPU, whereas the flexible chains provide the elongation characteristics to the polymer. It is this combination of properties of the TPU block copolymer system that make it desirable for use in seismic streamers.

As discussed above, thermoplastic polyurethanes are a versatile group of multi-phase segmented polymers that have excellent mechanical and elastic properties, good hardness and high abrasion and chemical resistance. Generally, polyurethane block copolymers are comprised of a low glass transition or low melting 'soft' segment and a rigid 'hard segment', which often has a glassy Tg or crystalline melting point well above room temperature.

For seismic streamer skins the soft segment is typically a dihydroxy terminated long chain macroglycol with a molecular weight between 500-5000 grammes per mole, though in practice, molecular weights of 1000 and 2000 grammes per mole, are primarily used. They include polyethers, polyesters, polydienes or polyolefins. The hard segment normally includes the reaction product of a disocyanate (aliphatic or aromatic) and a low-molecular weight diol or diamine (referred to as a 'chain extender'). The role of the chain extender will be discussed further below. The combination of this soft polyol segment and hard segment forms an (AB)n type block copolymer.

Polyurethane elastomers usually exhibit a two-phase microstructure. The microphase separation, or microdomain formation, results in superior physical and mechanical properties. The degree of separation or domain formation depends on the weight ratio of the hard to soft segment, the type and molecular weight of the soft segment, the hydrogen bond formation between the urethane linkages and the manufacturing process and reaction conditions, including the addition/use of catalysts. A further key component that may be used to tune the microdomain formation, and thus the final properties of the polyurethane block copolymer, is the role performed by the chain extender.

In the most common method of polyurethane production, i.e. via a two-step synthesis, or 'pre-polymer' route, the polyol is initially reacted with excess diisocyanate to form a diisocyanate terminated intermediate oligomer. The prepolymer is typically a viscous liquid or low melting point solid. The second step is to convert this prepolymer to the final high molecular weight polyurethane by further reaction with a low molecular weight diol chain extender - for example 1,4-butanediol, 1,6-hexanediol - or a diamine chain extender - for example ethylene diamine, 4,4'-methylene bis(2-chloroaniline). This step is generally referred to as chain extension.

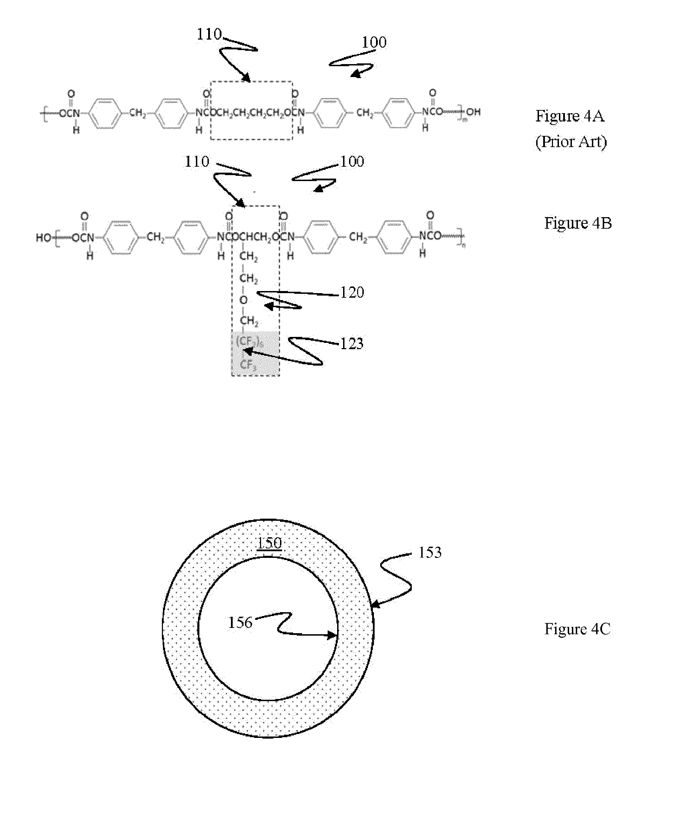

Figure 4A illustrates a TPU block copolymer as discussed above. As depicted, a TPU block copolymer 100 comprises a backbone 110. In a conventional seismic streamer skin, a chain extender (not shown) may be coupled with the backbone of the TPU block copolymer 100. The chain extender may comprise a diol or a diamine chain extender. In the absence of a chain extender, a polyurethane formed by directly reacting diisocyanate and polyol generally has very poor physical properties and often does not exhibit microphase separation. Thus, the introduction of the chain extender in a conventional seismic streamer skin material can increase the hard segment length of the material to permit hard segment segregation, which results in modified mechanical properties, such as an increase in the hard segment glass transition temperature (Tg) of the polymer.

In an embodiment of the present invention, by attaching the hydrophobic moieties via chain extenders to the TPU backbone, relatively large amounts/concentrations of the hydrophobic moieties can be added to the TPU. Moreover, the hydrophobic moieties are positioned along the TPU, which may space the moieties out and prevent the moieties interacting with one another and/or other chemistries in the TPU. By contrast, attaching hydrophobic moieties to the ends of the TPU structure will provide less amount/concentration of the hydrophobic moieties in the TPU and/or may result in the moieties interacting with one another, by for example bending the TPU backbone and/or the like.

Figure 4B illustrates a TPU block copolymer with a hydrophobically derivatized chain extender, in accordance with an embodiment of the present invention. In accordance with an embodiment of the present invention, a hydrophobically derivatized chain extender 120 is coupled with the backbone 110 of the TPU block copolymer 100. In certain embodiments of the present invention, the hydrophobically derivatized chain extender 120 may comprise a fluorinated or silicone derivatized species chosen from either of the two categorized main classes; namely the aromatic diol and diamine classes, and the corresponding aliphatic diol and diamine classes.

In Figure 4B, in accordance with one embodiment of the present invention, the hydrophobically derivatized chain extender 120 comprises fluorine moieties 123. In other aspects of the present invention, the derivatized chain extender 120 may comprise other hydrophobic moieties, such as silicon or the like.

In an embodiment of the present invention, to incorporate a fluorine moiety into the TPU backbone, a fluorinated chain extender may be used. These chain extenders are commercially available and may comprise perfluoroether diols or the like. In certain aspects of the present invention, the chemistry used for attaching the fluorinated chain extenders may be based on two monomers, namely hexafluoropropene or tetrafluoroethylene.

In other embodiments of the present invention, to incorporate silicone onto the TPU backbone, a siloxane chain extender is used. Merely by way of example, 1,3-bis(4-hydroxybutyl)-1,1,3,3-tetramethyldisiloxane and 1,3-bis(4-aminopropyl)-1,1,3,3-tetramethyldisiloxane may be used to yield a TPU that comprises siloxane chain extenders coupled with the backbone of the TPU.

In yet other embodiments of the present invention, rather than using a fluorine or silicone derivatized chain extender to yield a polyurethane/TPU with hydrophobic surface properties, a chain extender may be utilized that is chosen from the polyethylene glycol ("PEG") family. PEG molecules are hydrophobic and, as such, in aspects of the present invention the use of relatively low molecular weight (100-10,000 grammes per mole) PEG molecules - such as amine terminated PEGs, alcohol terminated PEGs and/or the like - as chain extenders provide for a TPU material that may be used to produce a streamer skin having surface anti-fouling properties.

The use of hydrophobic chain extenders in polyurethane has a limit with regard to the amount of hydrophobic modification that can be achieved. As such, in some embodiments of the present invention, to enhance the amount of hydrophobicity within the TPU polymer system, the hydrophobic chain extenders may be used in conjunction with a filler configured to increase the hydrophobic properties of the TPU and, as a consequence, make the material more resistant to biofouling. In aspects of the present invention, the fillers may comprise relatively high molecular weight hydrophobic polymers, typically in a solid form that can be blended or mixed with the hydrophobically modified polyurethane. Merely by way of example, hydrophobic additives that may be used in conjunction with a hydrophobically modified TPU, in accordance with an embodiment of the present invention, include polyethylene, polyisobutylene or polystyrene.

Merely by way of example, in one embodiment of the present invention, a hydrophobically modified polyurethane - which may be hydrophobically modified by linking the TPU backbone with chain extenders containing silicone moieties, fluorine a moieties and/or the like - may be blended with polytetrafluoroethylene ("PTFE") or polydimethylsiloxane ("PDMS") granules/pellets. In certain aspects, the PTFE may a micronized PTFE, which is commercially available.

In some aspects of the present invention, the hydrophobic additive may be blended with the hydrophobically modified TPU base material during a melt processing stage. The mixture may then be heated and extruded into pellets. In an embodiment of the present invention, the pellets may be heat extruded to form the streamer skin. The pellets may, in some aspects of the present invention, be extruded directly onto the streamer. In other aspects of the present invention, the pellets may be extruded to form a streamer skin of desired specifications, i.e. outer diameter, inner diameter, length *etc..* By creating a streamer skin of desired dimensions, the streamer body may be inserted into the streamer skin post extrusion. In aspects of the present invention, the streamer body may comprise a filler material, which may be a liquid filler, a solid filler, a gel filler and/or the like. In some aspects of the present invention, the pellets may be co-extruded with pellets of unmodified TPU to provide a streamer skin having hydrophobic properties that differ across the skins diameter. In some embodiments of the present invention, the filler material is selected to produce a streamer skin that, among other things, is more durable, has anti-fouling properties and provides an increased resistance to physical damage such as wear or abrasion.

In some embodiments of the present invention, the molecular additive is a solid. In other embodiments of the present invention, the molecular additive is a liquid that may be introduced into the melt processing stage via a preliminary stage. Merely by way example, the preliminary stage may comprise coating a TPU base material with the liquid molecular additive and then drying the coated TPU base material. The coated TPU base material may then be melted, extruded and pelleted. The produced pellets may then be blended with unmodified TPU to generate a modified TPU with increased wear-resistance and/or hydrophobic properties. Thus, embodiments of the present invention, provide that liquid-based additives, such as silicone, fluoropolymers or fluorosilicone containing species may be used as molecular additives that may be used with the hydrophobically modified TPU.

Figure 4C illustrates a streamer skin comprising a TPU block copolymer in accordance with an embodiment of the present invention. As depicted in Figure 4C, a streamer skin 150 comprises the TPU bock copolymer with the hydrophobic chain extenders. By using the TPU bock copolymer with the hydrophobic chain extenders - the hydrophobic chain extenders comprising hydrophobic elements such as silicon, fluorine and/or the like - to form the streamer skin 150, the hydrophobic moieties are distributed throughout the streamer skin 150 including at an outer-surface 153 and an inner-surface 156 of the streamer skin 150. In an embodiment of the present invention, the outer-surface 153 is modified by the presence of the hydrophobic elements such that the outer-surface 153 is hydrophobic, has a high contact angle and imparts antifouling properties to the seismic streamer.

In an embodiment of the present invention, the TPU bock copolymer comprising the hydrophobically modified chain extenders is extruded to produce a seismic streamer skin. For example, the TPU bock copolymer comprising the hydrophobically modified chain extenders may comprise pellets that may be heated and extruded into the streamer skin configuration. The extrusion method disperses the hydrophobic moieties both through the bulk matrix and at the surface of the streamer skin.

In an embodiment of the present invention, the streamer skin may be fabricated by reacting the hydrophobic chain extenders with a prepolymer to produce the hydrophobically-modified thermoplastic polyurethane (TPU). In this way, the hydrophobic moieties are chemically reacted into the hard segments of the polyurethane backbone. In an embodiment of the present invention, by reacting the hydrophobic moieties into the hard segments of the polyurethane backbone, a thermoplastic polyurethane block copolymer is produced that exhibits a two-phase microstructure. The hydrophobic moieties, which may comprise fluorine, silicone or the like, may in some aspects be dispersed essentially homogenously throughout the TPU; the hydrophobic moieties being localized predominantly in the hard, rigid segments (glassy or semicrystalline domains) and also dispersed within the polyol soft (amorphous, rubbery) segments of the block copolymer.

In an embodiment of the present invention, the hydrophobically modified TPU can be used as the polyurethane master batch to produce seismic streamer tubing. As fluorine/silicone is dispersed throughout the TPU master batch, following the extrusion process, a streamer skin is produced which yields a hydrophobic, low-energy surface. The incorporation of hydrophobic derivatized chain-extenders, such as fluorine or silicon derivatized chain extenders, into the polyurethane synthesis reaction will thus impart a change in the surface chemistry upon the thermoplastic polyurethane such that it is less water-wetting than its non-modified counterpart. In an embodiment of the present invention, this change in the surface wettability makes the resulting extruded streamer tubing surface less susceptible to biofouling.

In embodiments of the present invention, the streamer skin may comprise biocidal additives in addition to the antifouling additives. In certain aspects, the biocide may take the form of, but is not limited to, nanoparticles of silver, copper oxide or zinc oxide, quaternary ammonium salts and organic species, such as benzoic acid, tannic acid or capsaicin. In an embodiment of the present invention, the biocide may be blended with the antifouling additives prior to blending with the base material of the streamer skin. In other embodiments, the biocidal materials may be coated on the streamer skin, which streamer skin includes the hydrophobically modified chain extenders. The biocidal elements may prevent the build-up of marine species, including micro-foulers (which are food sources for the macrofoulers), on the seismic streamer.

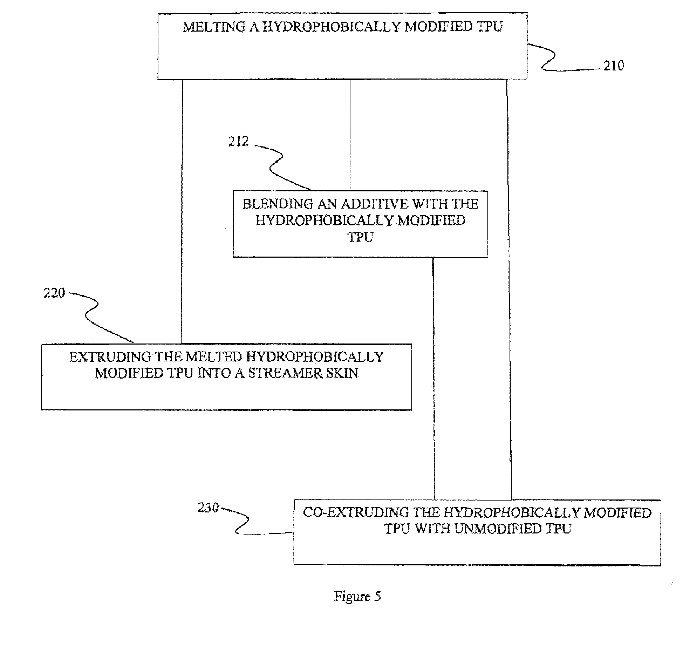

Figure 5 illustrates a method of fabricating a seismic streamer skin with a hydrophobically modified surface. In step 210, a hydrophobically modified TPU is melted. The hydrophobically modified TPU, as discussed above, comprising chain extenders containing hydrophobic moieties.

In step 220 the melted hydrophobically modified TPU is extruded into a seismic streamer, where the chain extenders containing hydrophobic moieties provide that the extruded seismic streamer has a surface, the inner/outer surface of the streamer skin, that is hydrophobic.

In step 212, an additive may be blended with the melted hydrophobically modified TPU. The mixture produced in step 212 may then be extruded in step 220 into the streamer skin. The additive may comprise hydrophobic moieties, moieties that increase the strength of the hydrophobically modified TPU and/or the like. The additive may comprise pellets that are melted with pellets of the hydrophobically modified TPU. In some aspects of the present invention, the additive may comprise a biocide.

In step 230, the hydrophobically modified TPU may be co-extruded with unmodified TPU. In this way, a streamer skin may be provided that consists of two skins that are annealed together, the two skins having a hydrophobically modified region and an unmodified region of TPU separated by a region having varying amounts of hydrophobic modification. In this way, a streamer skin may be produced having an outer surface comprising hydrophobically modified TPU and having hydrophobic properties an inner-surface comprising unmodified TPU and not having hydrophobic properties or, in some aspects even having hydrophilic properties. In certain aspects, the hydrophobically modified TPU may be simultaneously heat extruded with the unmodified TPU to form a multilayer polymer. In some aspects, the multilayer polymer may be extruded onto the seismic streamer. In other aspects, the multilayer polymer may be formed into a seismic streamer skin of desired dimensions into which a streamer body may be inserted.

In an embodiment of the present invention, by simultaneously heat extruding the two mixtures, the TPU polymers anneal with one another, effectively integrates across the layer comprising the regular TPU and the hydrophobically modified TPU to form a multilayer polymer that does not include a boundary layer, thus, preventing the disintegration, delamination issues that occur when a coating is applied to a streamer skin.

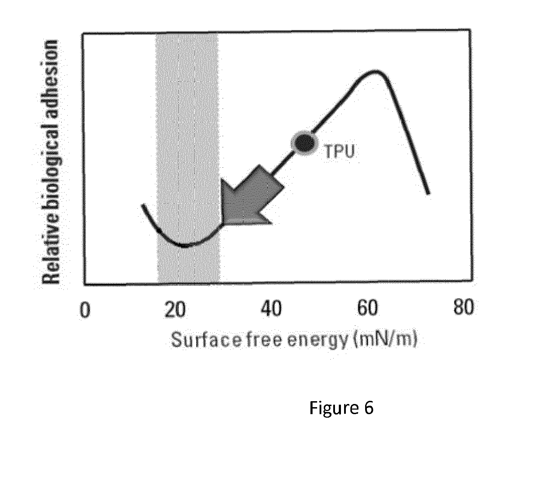

As briefly described herein, a high surface energy may be a contributing factor to the propensity of a streamer skin to be fouled by marine organisms. By reducing the surface energy of the streamer skin a reduction in the amount of fouling on these materials may be observed. As shown in Figure 6, a streamer skin or casing (e.g., of TPU polymers) typically exhibits a surface energy of around 43 mN/m. As also shown in Figure 6, the amount of biofouling of the streamer skin (or put another way the biological adhesion of marine organism) reduces as the surface energy decreases. Between the surface energy values of approximately 15 mN/m and 30 mN/m (i.e., the gray region in Figure 6) the amount of biofouling of the streamer skin observed is minimized and/or eliminated such that little to no marine organisms adhere to the streamer skin surface. Biofouling may be further reduced between the surface energy ranges of approximately 20 to 25 mN/m, which corresponds to roughly the bottom of Figure 6's surface energy curve.

The surface energy of the streamer skin may be reduced to approach the 30 mN/m value by adding a hydrophobic additive to the streamer skin's base polymer (e.g., the TPU bock copolymer) as described herein so that the streamer skin comprises about 0.1% of by weight. The hydrophobic additive may include hydrophobically derivatized chain extenders having a hydrophobic moiety (e.g., a fluorine derivative, a silicon derivative, a polyethylene glycol derivative, and the like), and/or may include hydrophobic fillers as described herein. In a specific embodiment, hydrophobic additives may be added to the streamer skin so that the streamer skin comprises a 0.5% content by weight, or greater, of the hydrophobic additives. Applicants have observed that a streamer skin comprising a hydrophobic additive content of at least 0.5% exhibits a surface energy within the desired 15 to 30 mN/m range that reduces or eliminates marine biofouling.

In terms of the desired surface energy range (i.e., the 15 to 30 mN/m range), and depending on the hydrophobic additive used, there may be no upper limit as to the amount of the hydrophobic additive that may be incorporated into the streamer skin. For example, a pure PTFE surface (i.e., a surface with approximately 100% PTFE) exhibits a surface energy of about 19 mN/m. As such, essentially any amount of a fluorine derivate hydrophobic additive may be incorporated into the streamer skin (e.g., incorporating a perfluoropolyether into a TPU backbone) without falling below the 15 mN/m surface energy value since the incorporation of the hydrophobic additive will result in a surface less than a pure PTFE surface.

Since, 19 mN/m is near the 20 to 25 mN/m surface energy range corresponding to the bottom of the surface energy curve, it may be advantageous to incorporate a large amount and/or concentration of perfluoropolyether or another hydrophobic additive into the streamer skin (e.g., TPU backbone) so that the streamer skin's surface roughly approximates a pure PTFE surface. Surprisingly, however, large amounts or concentrations of the hydrophobic additive adversely affect one or more properties of the streamer skin, such as the hardness, rigidity, elastic modulus, tear strength, and the like. For example, Applicants have observed that excessive concentrations or amounts of the hydrophobic additive negatively affect the manufacturability of the streamer skin by preventing or hindering the streamer skin from being properly extruded.

Excessive hydrophobic additive concentrations or amount may weaken the streamer skin's base polymer, and/or render the modified polymer "slippery", such that manufacturing (e.g., extrusion) of the modified polymer is impractical. For example, excessive concentrations of the hydrophobic additive result in detrimental 'screw-slip' during the synthesis of modified polyurethane pellets and/or during tube extrusion resulting in the streamer skins that are not extrudable and/or that do not meet defined standards. To provide sufficient anti-biofouling characteristics without detrimentally affecting properties of the streamer skin, a precise amount or concentration of the hydrophobic additive must be added. This amount or concentration may be dependent on the hydrophobic additive used (e.g., on the specific silicone molecule, fluorine molecule, and the like).

In one embodiment, the hydrophobic additive (e.g., a hydrophobically derivatized chain extender) may be added up to and including a concentration of approximately 10% by weight without adversely affecting the manufacturability or other bulk physical properties of the streamer skin. This concentration (i.e., 10%) may correspond to Fluorinated Polyoxetanes, such as PolyFox® manufactured by Omnova Solutions Inc., which may be incorporated into the TPU backbone. In another embodiment, the hydrophobic additive may be added up to and including a concentration of approximately 4% by weight without adversely affecting the manufacturability or other bulk physical properties of the streamer skin. This upper concentration (i.e., 4%) may correspond to silicon derivatives, such as Silmer OH Di-50® manufactured by Siltech Corporation, which may be incorporated into the TPU backbone. In yet another embodiment, the hydrophobic additive may be added up to and including a concentration of approximately 2% by weight without adversely affecting the manufacturability or other bulk physical properties of the streamer skin. This upper concentration (i.e., 2%) may correspond to fluorine derivatives, such as Fluorolink D10-H® manufactured by Solvay, which may be incorporated into the TPU backbone.

Applicants have additionally observed that adding the hydrophobic additive in the above described amounts or concentrations (e.g., between about 0.1% and 10%, 0.5% and 5%, 0.5% and 4%, and the like) surprisingly enhances the abrasion resistance of the streamer skin. Thus, streamer skins comprising hydrophobic additives in the above described amounts or concentrations exhibit not only improved resistance to biofouling, but additionally exhibit improved resistance to abrasion. In other words, adding the hydrophobic additive in the above described amounts or ranges may surprisingly enhance bulk physical properties of the streamer skin rather than diminish these properties. The increased abrasion resistance exhibited by such streamer skins may further reduce biofouling of the streamer skin by preventing or reducing the roughening of the streamer skin's surface during usage, which thereby reduces areas where marine organisms may adhere to the streamer skin.

In accordance with the above description, in one embodiment, an anti-biofouling casing for a seismic streamer includes a polymer system having a hydrophobically-modified base polymer. The hydrophobically-modified base polymer includes a base polymer having a backbone and a hydrophobically derivatized chain extender coupled to the backbone of the base polymer. The polymer system includes between about 0.1 % and 10% of the hydrophobically derivatized chain extender by weight. The hydrophobically derivatized chain extender includes a hydrophobic moiety, which in some embodiments may be a fluorine derivative, a silicon derivative, a polyethylene glycol derivative, and the like. In some embodiments, the hydrophobically-modified base polymer may be produced by reacting a pre-polymer with the hydrophobically derivatized chain extender as described herein. The pre-polymer may include polyurethane, thermoplastic polyurethane, urethane, polyvinylchloride, and polyethylene, and the like.

In another embodiment, the polymer system includes between about 0.5% and 4% of the hydrophobically derivatized chain extender by weight, such as when the hydrophobic moiety includes a silicon derivative. In yet another embodiment, the polymer system includes between about 0.5% and 2% of the hydrophobically derivatized chain extender by weight, such as when the hydrophobic moiety includes a fluorine derivative. In one embodiment, the base polymer includes polyurethane, thermoplastic polyurethane, urethane, polyvinylchloride, polyethylene, and the like.

As described above, the polymer system may include an (AB)ₙ type block copolymer where the (AB)ₙ type block copolymer includes a soft polyol segment and a hard segment having the hydrophobically-modified base polymer. The (AB)ₙ type block copolymer may have a two-phase microstructure. In one embodiment, the soft polyol segment may include a dihydroxy terminated long chain macroglycol. In some embodiments, the streamer skin or polymer system may also include a biocide, such as those described previously. The streamer skin or polymer system may also include a hydrophobic polymer filler as described herein. In some embodiments, the hydrophobic polymer filler is homogeneously dispersed throughout the anti-biofouling casing.

According to another embodiment, an anti-biofouling casing for a seismic streamer may include a polymer system having a base polymer and a hydrophobic polymer filler. The polymer system may include between about 0.1% and 10% of the hydrophobic polymer filler by weight to provide the anti-biofouling characteristics described herein. In another embodiment, the polymer system may include between about 0.5% and 4% of the hydrophobic polymer filler by weight. In yet another embodiment, the polymer system may include between about 0.5% and 2% of the hydrophobic polymer filler by weight.

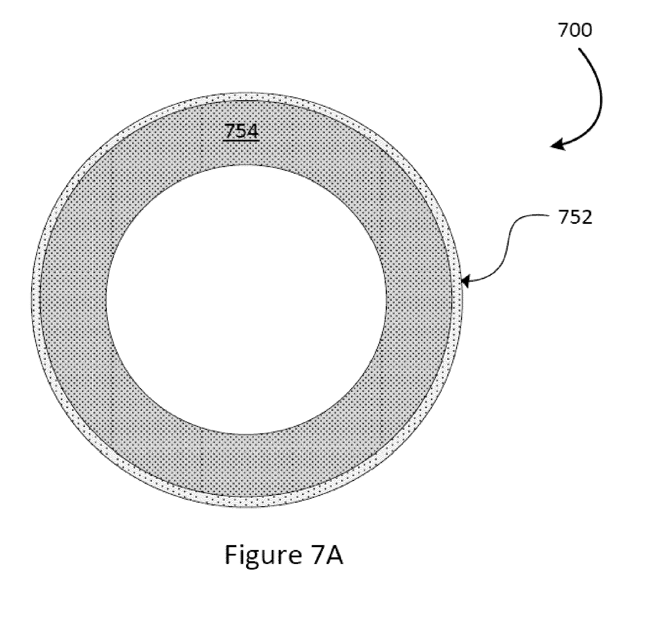

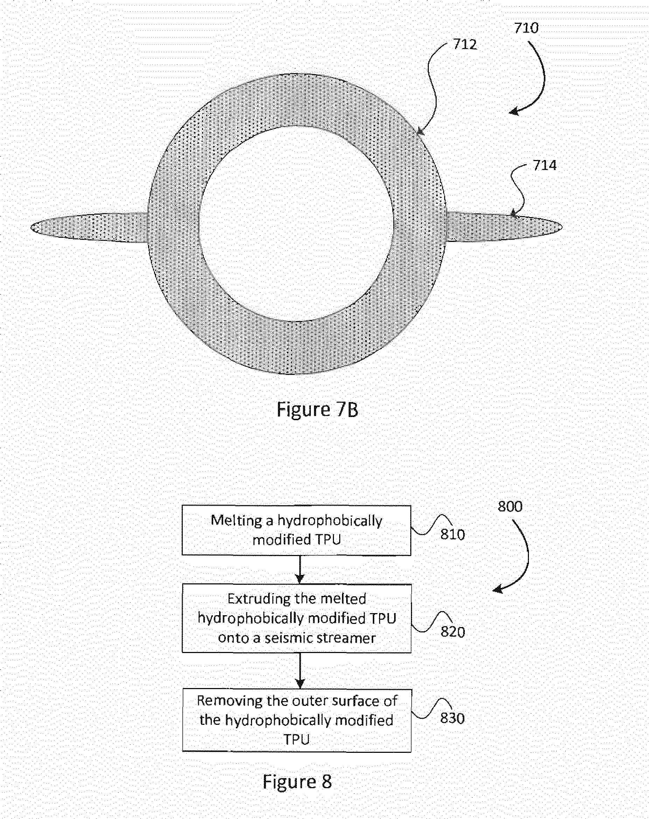

Referring now to Figures 7A and 7B, illustrated are embodiments of streamer skins or anti-biofouling casings including the hydrophobically modified base polymers described herein (e.g., the TPU bock copolymer or other base polymers with hydrophobic chain extenders including fluorine derivative, silicone derivative, or other hydrophobic moieties). The hydrophobically modified base polymers may be distributed throughout streamer skin 700 and specifically throughout an outer-surface or region 752 and an inner-surface or region 754. In one embodiment, inner region 754 may include a greater concentration or amount of the hydrophobically modified base polymers than outer region 752, as illustrated by the increased dot pattern within inner region 754 compared to outer region 752.

The hydrophobically modified base polymers may concentrate within inner region 754 as the streamer skin 700 is extruded and cooled. For example, in one embodiment, streamer skin 700 is sprayed or quenched with a liquid, such as water, to cool skin 700 after it is extruded through a die. The cooling of skin 700 and/or spraying of the water or other liquid coolant may cause or otherwise encourage the hydrophobically modified chain extenders and/or base polymers to flow or migrate away from outer-surface or region 752 resulting in outer-surface or region 752 having a lower concentration or amount of hydrophobically modified base polymers. Outer region 752, having the lower hydrophobically modified base polymers concentration, may be between about 10 to 40 microns thick, although in other embodiments, the outer region may be between about 20 and 30 microns thick.

The decreased concentration or amount of hydrophobically modified base polymers in outer region 752 may result in the outer surface of streamer skin 700 having or exhibiting an increased surface energy as compared to inner region 754. In some embodiments, the surface energy of outer region 752 may be at or above the 30 mN/m value at which anti-biofouling characteristics are observed. In other words, the lower concentration of hydrophobically modified base polymers in the streamer skin's outer surface may result in biofouling of the streamer skin even when a sufficient amount or concentration of the hydrophobically modified base polymers is incorporated into the streamer skin.

To alleviate potential biofouling problems that may be associated with streamer skin's having a low concentration of hydrophobically modified base polymers at or near the outer surface, streamer skin 700 may have a portion of its outer surface removed so that all or a portion of outer region 752 having the lower concentration or amount of hydrophobically modified base polymers is removed. In other words, all or a portion of the outer surface of skin 700 may be removed so that the inner region 754 exhibiting the higher hydrophobically modified base polymers concentration or amount is exposed to the environment. In this manner, a streamer skin having an outer surface within the desired anti-fouling range of 15 to 30 mN/m, or 20 to 24 mN/m, may be provided or otherwise ensured.

Streamer skin 700 may be extruded and partially cooled before the outer surface is removed so that skin 700 is partially but not fully hardened. Removing the outer surface of streamer skin 700 may include extruding skin 700 through a die and/or using any other conventional manufacturing processes. The outer surface of skin 700 may be removed around a portion of skin 700's periphery (e.g., a top surface and the like), or may be removed around the entire periphery. The outer surface may be removed to a depth of between about 10 and 50 microns so as to remove all, or a portion of, outer region 752 and thereby expose inner region 754. In another embodiment, the outer surface may be removed to a depth of between about 20 and 30 microns to expose inner region 754.

Figure 7B shows another streamer skin 710 having one or more members 714, such as fins or "birds", extending from the skin's body 712. Members or fins 714 may be used to control an orientation of streamer skin 710 as it is towed through a body of water. In one embodiment, members 714 are made of the, or otherwise include, the hydrophobically-modified base polymers described herein so as to prevent biofouling of members 714. For example, members 714 may be composed of the hydrophobically-modified base polymer or be encased within a skin that includes the hydrophobically-modified base polymer.

As described in Figure 2, skins 700 and 710 may cover an exterior or outer surface of a streamer body that includes one or more sensors, a strength member, a filler material (e.g., kerosene, a solid material, a gel, and the like), and the like as described herein. In one embodiment, skin 700 may be transparent so that at least a portion of the interior of the casing is visible. This may allow a user of the streamer skin 700 to view components disposed within skin 700, such as the sensors or filler material. Merely by way of example, in one embodiment, the transparent streamer skin may comprise a hydrophobically modified TPU, which inclused a fluorinated diol with pendent fluorine chains.

Referring now to Figure 8, illustrated is a method 800 of manufacturing an anti-fouling seismic streamer. At block 810, a hydrophobically modified TPU is melted, or alternatively, individual TPU pellets and hydrophobically modified chain extender pellets are melted to form the hydrophobically modified TPU as described previously. The hydrophobically modified TPU includes a hydrophobically-modified base polymer including a base polymer with a hydrophobically derivatized chain extender coupled to the backbone of the base polymer. The hydrophobically modified TPU includes between about 0.1% and 10% of the hydrophobically derivatized chain extender by weight.

At block 820, the melted hydrophobically modified TPU is extruded onto a seismic streamer body. At block 830, an outer surface of the hydrophobically modified TPU is optionally removed to remove an outer region of the modified TPU having a lower concentration or amount of the hydrophobically modified chain extenders. In one embodiment, between about 10 and about 40 or 50 microns of the outer surface are removed, although in another embodiment, between about 20 and about 30 microns are removed. The outer surface may be removed around a portion of the seismic streamer's periphery, or around the entire periphery.

The step of extruding the melted hydrophobically modified TPU onto the seismic streamer body may include extruding the polymer system into a tube and inserting a seismic streamer body into the extruded tube. In one embodiment, method 800 also includes: reacting a polyol with diisocyanate to form a diisocyanate terminated intermediate oligomer and reacting the intermediate oligomer with a chain extender including a hydrophobic moiety. The chain extender may include a low molecular weight diol and/or low molecular weight diamine.

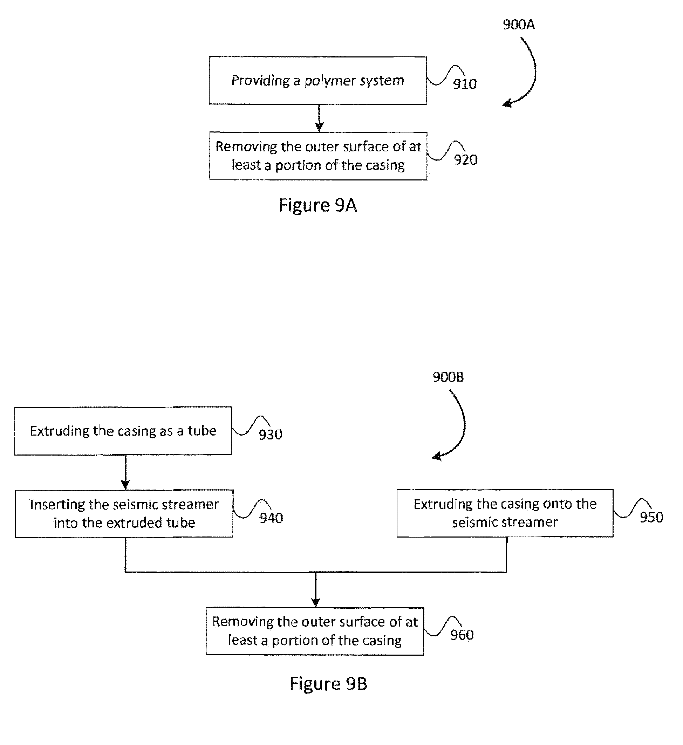

Referring now to Figure 9A, illustrated is a method 900A of manufacturing an anti-biofouling casing for a seismic streamer. At block 910 a polymer system is provided. As described herein, the polymer system may include a hydrophobically-modified base polymer including: a base polymer having a backbone and a hydrophobically derivatized chain extender coupled to the backbone of the base polymer. According to one embodiment, the polymer system may include between about 0.1% and 10% of the hydrophobically derivatized chain extender by weight. In another embodiment, the polymer system includes between about 0.5% and 4% of the hydrophobic polymer filler by weight. In yet another embodiment, the polymer system includes between about 0.5% and 2% of the hydrophobic polymer filler by weight.

At block 920, an outer surface of at least a portion of the casing may be removed as described herein. In one embodiment, the outer surface of the casing is removed around the casing's entire periphery. The outer surface removed may be between about 10 and about 40 or 50 microns, while in another embodiment, the outer surface removed may be between about 20 and about 30 microns.

The outer surface may be removed while the casing is in a molten or softened state. For example, the casing may be partially cooled by spraying the casing with a liquid (e.g., water) after extruding the casing so that the casing is in the molten or softened state. Spraying the casing with liquid may also cause the hydrophobically-modified base polymer and/or hydrophobically derivatized chain extender to migrate slightly away from the casing's outer surface prior to removal thereof.

In some embodiments of the present invention, the anti-biofouling casing may be applied to other forms of marine equipment, such as birds for controlling the streamers, sections of boats, wave machines, legs of marine structures such as oil rigs, wind turbines and/or the like, buoys, marine cables, marine pipes and/or the like. The anti-biofouling casing may be extruded onto marine equipment, heat sealed/soldered on to the marine equipment, tethered around the marine equipment and/or the like. Merely by way of example, sections of the anti-biofouling casing may be applied to a section of a hull of a boat or a section of a wave machine when the anti-biofouling casing is still molten. In other embodiments, where the section of the marine equipment itself comprises a TPU like substance, the section may also be heated to provide for bonding between the section of the marine equipment and the anti-biofouling casing.

Referring now to Figure 9B, illustrated is another embodiment of a method 900B of manufacturing an anti-biofouling casing for a seismic streamer. Method 900B includes two processes that may be used to dispose or house a seismic streamer within a casing prior to removing a portion of the casing's outer surface. One of the processes begins at block 930 where the casing is extruded as a tube. At block 940, the seismic streamer is inserted into the extruded tube prior to removing the outer surface of the casing. At block 960, the outer surface of at least a portion of the casing is removed.

An alternative process begins at block 950 where the casing is extruded onto the seismic streamer prior to removing the outer surface of the casing. At block 960, the outer surface of at least a portion of the casing is removed. Removing the outer surface of the casing may include extruding the casing through a die after partially or fully cooling the casing.

While the principles of the disclosure have been described above in connection with specific apparatuses and methods, it is to be clearly understood that this description is made only by way of example and not as limitation on the scope of the invention.

## Claims

1. An anti-biofouling casing for a seismic streamer, comprising:
a tubular casing body having a longitudinal length and a diameter, the tubular casing body being configured to cover an exterior of a streamer body so as to reduce biofouling of the streamer body, the tubular casing comprising:
a polymer system comprising a hydrophobically-modified base polymer, the hydrophobically-modified base polymer comprising:
a base polymer having a backbone; and
a hydrophobically derivatized chain extender coupled to the backbone of the base polymer, wherein the polymer system comprises between about 0.1 % and 10% of the hydrophobically derivatized chain extender by weight.

2. The anti-biofouling casing of claim 1, wherein the hydrophobically derivatized chain extender comprises a hydrophobic moiety.

3. The anti-biofouling casing of claim 2, wherein the hydrophobic moiety comprises at least one of a fluorine derivative, a silicon derivative and a polyethylene glycol derivative.

4. The anti-biofouling casing of claim 1, wherein the polymer system comprises between about 0.5% and 4% of the hydrophobically derivatized chain extender by weight.

5. The anti-biofouling casing of claim 1, wherein the polymer system comprises between about 0.5% and 2% of the hydrophobically derivatized chain extender by weight.

6. The anti-biofouling casing of claim 1, wherein the base polymer comprises one of polyurethane, thermoplastic polyurethane, urethane, polyvinylchloride and polyethylene.

7. The anti-biofouling casing of claim 1, wherein the hydrophobically-modified base polymer is produced by reacting a pre-polymer with the hydrophobically derivatized chain extender.

8. The anti-biofouling casing of claim 1, wherein the casing is transparent such that at least a portion of the interior of the casing is visible.

9. A method of manufacturing an anti-fouling seismic streamer, comprising:
extruding a polymer system onto a seismic streamer body so as to cover an exterior of the streamer body with a casing configured to reduce biofouling of the streamer body, wherein the polymer system comprises:
a hydrophobically-modified base polymer including:
a base polymer; and
a hydrophobically derivatized chain extender coupled to a backbone of the base polymer, wherein the polymer system comprises between about 0.1 % and 10% of the hydrophobically derivatized chain extender by weight.

10. The method of claim 9, further comprising removing an outer surface of at least a portion of the casing.

11. The method of claim 10, wherein the outer surface removed is between about 10 and about 40 microns.

12. The method of claim 10, wherein the outer surface removed is between about 20 and about 30 microns.

13. The method of claim 10, wherein the outer surface is removed while the casing is in a molten or softened state.

14. The method of claim 10, wherein the outer surface of the casing is removed around the entire periphery of the casing.

15. The method of claim 9, wherein the casing is extruded as a tube and the seismic streamer is inserted into the extruded tube.

16. The method of claim 9, wherein the polymer system comprises between about 0.5% and 4% of the hydrophobic polymer filler by weight.

17. The method of claim 9, wherein the polymer system comprises between about 0.5% and 2% of the hydrophobic polymer filler by weight.
